# EUROPEAN PATENT APPLICATION

(11) **EP 3 795 275 A1**
(43) Date of publication of application: **24.03.2021**
(21) Application number: 20195927.7
(22) Date of filing: 14.09.2020
(51) Int. Cl.: B22D 17/22, B29C 33/30, B29C 45/26, B22D 17/24

(54) **MOULD WITH VARIABLE IMPRINTS**

(30) Priority: 18.09.2019 IT 201900016586
(71) Applicant: Stocchiero Srl, 36071 Vicenza (IT)
(72) Inventor: STOCCHIERO, Paolo, 36071 VICENZA (IT)
(74) Representative: Bettello, Pietro

(57) **Abstract**

This invention relates to a mould with variable imprints, to be used in injection moulding and die casting, for producing printed parts made of various material, composed of plates which define the negative shape of parts to be realized. Such mould is of the type that foresees that one or more plugs are associated with plates, where one or more portions of "main imprint" (K) are obtained, on which plugs further portions of "additional imprints" of a different conformation are obtained, necessary for obtaining the different shapes, complete with the printed products and where, with the operation known by the term of "version charge", the ends of the aforesaid "additional imprints" are made to correspond with the ends of the corresponding "main imprints" (K), so as to be able to obtain, with just one mould, a plurality of total imprints that have mutually different shapes. Said mould (100) provides that plugs (2) are withheld on a plate (1) by means of a movable constraint that allows said plugs (2) to be oriented and positioned, so that the ends of portions of additional imprints (Aₙ), match the ends of corresponding imprints (K) obtained on the aforesaid plate (1).

## Description

The present invention relates to a mould with variable imprints to be used for injection moulding and die casting, according to the general part of claim 1.

As is known, the main components of moulds for injection moulding and die casting of various material, from plastic to biological and metal material, are the plates known by the terms "matrix" and "punch", on which the negative shape of the parts to be realized is obtained, the so-called "imprint".

In particular, the operating condition of having to realize moulded objects that have conformations that can be considered similar is frequent, as they only differ in terms of the different shape of some of their portions, whereas the remaining portion of the moulded body is identical for all of the aforesaid objects.

By way of example, coat hangers can be mentioned which are substantially the same in the central part, where the metal hook is inserted, whereas they differ in terms of the length and shaping of the two ends.

Operatively, to have an economic advantage, a single mould known as a "variable imprint" mould is made, which is comprised of two plates on which one or more imprints are obtained, the same or mutually different, and one or more plugs, which bear the specific and different imprints of each individual moulded product.

In practice, one or more plugs are combined with the two plates on which the different imprints are obtained, which complete the other moulded parts, related to specific pieces, so as to be able to obtain a plurality of total imprints with one single mould but which have mutually different shapes.

Such operating method enables a remarkable economic advantage to be obtained as it is not necessary to realize a complete mould for every different piece of the moulded series, but only a plurality of interchangeable plugs and a single block, which constitutes the main body, comprised of a fixed plate and a mobile plate. However, it has all the operating drawbacks deriving precisely from the management of said interchangeable plugs.

In practice, the individual plugs, which can be attributed to metal blocks (steel, aluminium or other material) and which are frequently heavy, when combined with the plates, for the so-called "version change" operations, need to be positioned precisely, with hundredth tolerances, to make the ends of the imprints present on the plug match the corresponding ends of the imprints present on the plates; all this requires the work of specialist personnel, to prevent damage both during the transfer from the warehouse to the processing department and, above all, during the positioning step of said plugs in the plates.

In particular, the transport and manual positioning of the plugs must be performed with great care to prevent the plugs accidentally colliding with the walls of the plates, damaging both the plugs themselves and the "main" plates, or falling and getting damaged and constituting a cause of accidents for the operator him/herself who is, therefore, subjected to notable psycho-physical strain.

The most important document in the state of the art is constituted by WO 97/10090 A1. In particular, this document illustrates a mould in which the plugs are withheld by a plate through a mobile constraint which enables the aforesaid to be oriented and positioned, so that the ends of additional portions of imprints are combined with the ends of corresponding imprints obtained on the aforesaid plate. It is further envisaged that the plugs are provided with translational motion; again, it is envisaged that the plug on which the additional imprints are obtained with different shapes is positioned at the plate and is constrained by means of pins or similar sliding elements, which enable said plug to make a translational movement which allows the ends of the additional imprints to correspond alternately with the ends of the imprints obtained on the plate.

The main aim of the present invention is to realize a mould with variable imprints which is more effective and functional with respect to the device just mentioned and described.

A further aim of the invention is that of realizing a mould with variable imprints that is however free from the drawbacks displayed by similar products of the known type, as reported above.

Specifically, the aim of the invention is to realize a mould with variable imprints in which the "version change" operation is easy and quick to perform.

A further aim is that of realizing a mould with variable imprints that is easy to manoeuvre, so as not to require the intervention of specialist personnel to ensure the perfect and precise positioning of the plugs in the plates.

A further aim is that of realizing a mould with variable imprints that protects the psycho-physical safety of the operator during the "version change" operation.

Such aims are achieved with the realization of a mould with variable imprints of the type constituted by a single block, mainly composed of the fixed part or fixed plate and the mobile part or mobile plate, on which a portion of the main imprints are obtained and one or more plugs, on which the additional imprints with a different conformation are obtained, necessary for obtaining the different shapes of the moulded products.

The novelty characteristic of the invention is comprised of the fact that the plugs, on which the differently shaped additional imprints are obtained, are withheld on the block by means of a mobile constraint which enables said plugs to be oriented and positioned so that a specific additional imprint thereof is combined with the corresponding imprint obtained and present on the plate.

Operatively, the movement of the plug, to rest on or be allocated in a seat obtained on the plate, can be simply translational, simply rotary or combined roto-translational.

Further documents in the state of the art JP S53127326 A and ES 2383638 A1 can be cited.

The invention shall be better defined by means of the description of three possible embodiments, provided by way of non-limiting example, with the aid of the appended drawings, where:
- Figg. 1-6 represent a first embodiment of the invention, with the linearly sliding plug;
- Figg. 7-13 represent a second embodiment of the invention, with the plug that is oriented with a roto-translational movement;
- Fig. 14 represents a third embodiment of the invention with the plug that is oriented with a rotary movement:
- Fig. 15 represents the views of the series of products moulded using the mould according to the invention.

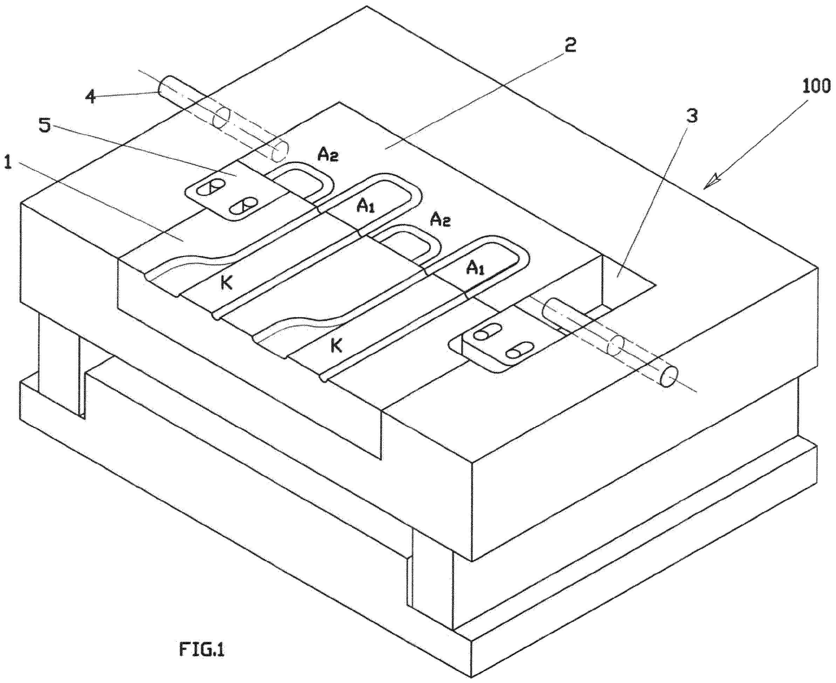

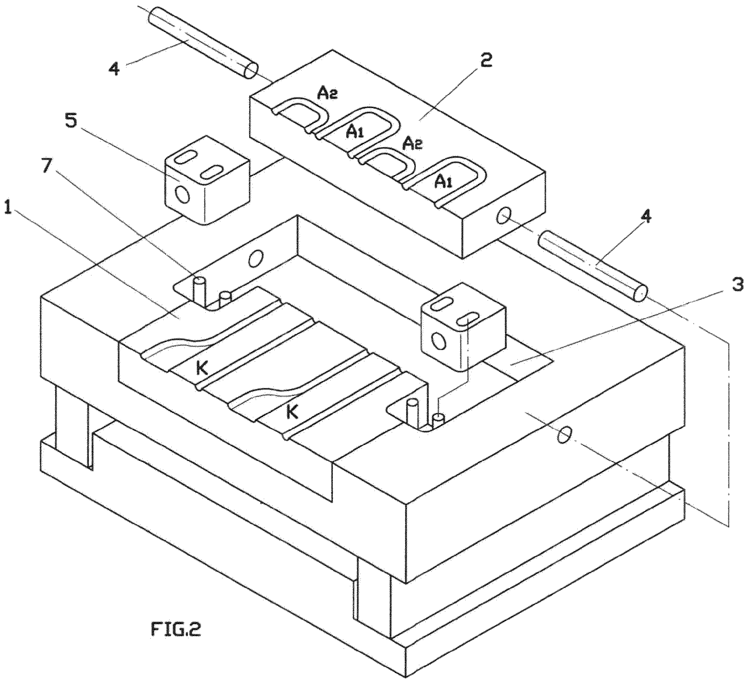

As can be seen in Figures 1-6, a first embodiment of the mould, indicated as a whole with reference 100, envisages a plate 1, which can in turn be inserted into other plates that compose the mould, where the two main imprints "K" and a plug 2 are obtained, on which the additional imprints are obtained, consisting of two pairs "A₁, A₂", having a different shape.

The plug 2 is allocated in the seat 3 and is constrained by means of pins 4, consisting of sliding rods or other systems suitable for the purpose, which enable said plug 2 to make a translational movement that, alternately, makes the ends of the pairs of additional imprints "A₁, A₂" correspond with the pair of main imprints "K" ("version change" operation).

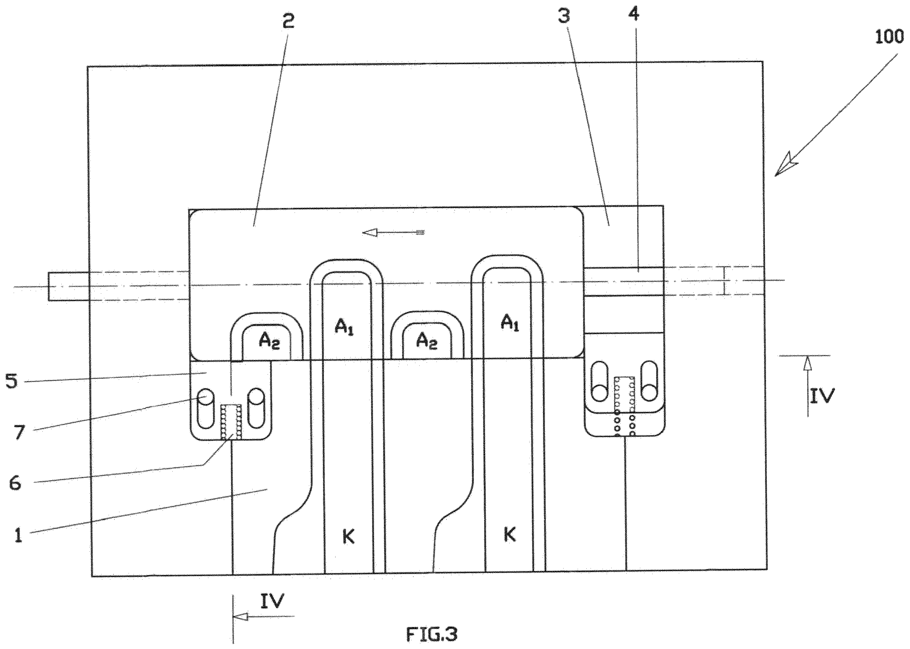

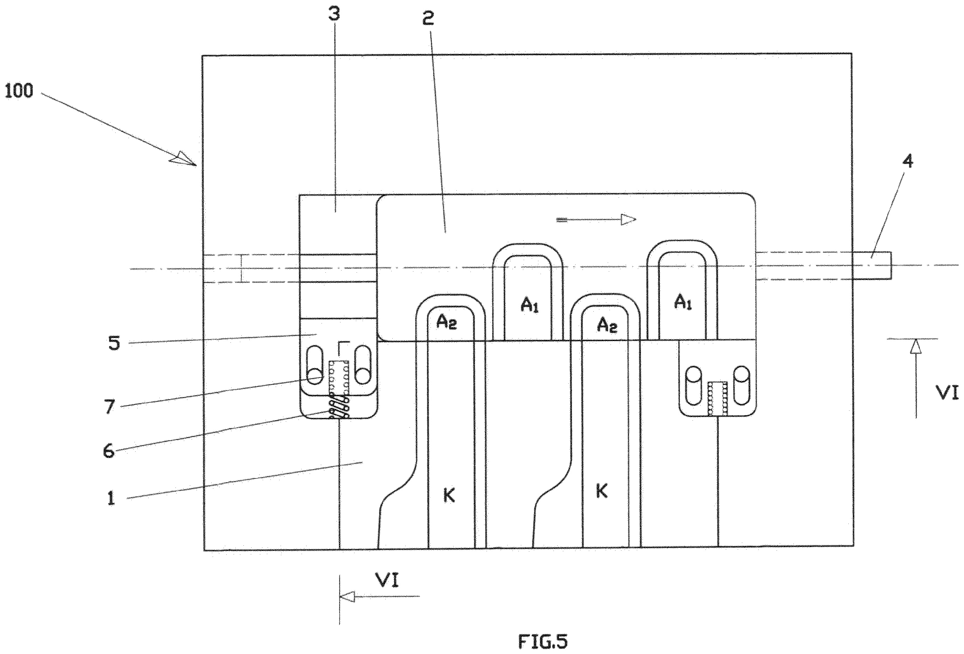

Constructively, the plug 2 is withheld in the two operating positions (see Figure 3 and 5) through two keys 5 placed in correspondence with the two ends of the seat 3, which, alternately, lead in lateral abutment onto said plug 2.

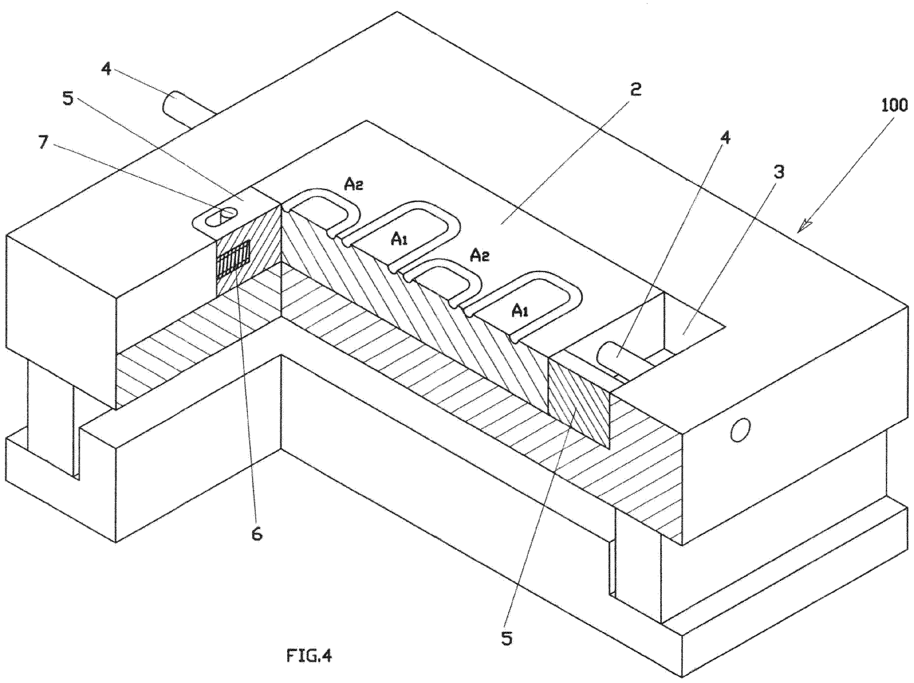

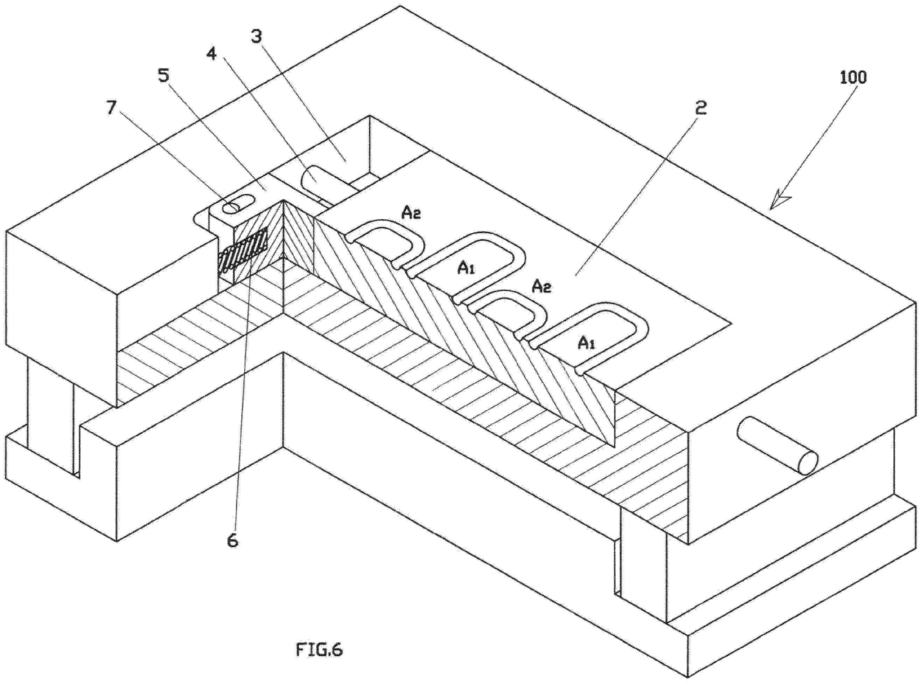

Advantageously, the keys 5 are strained by a pre-loaded elastic element 6 and slide on guide pegs 7 (see Figures 4 and 6).

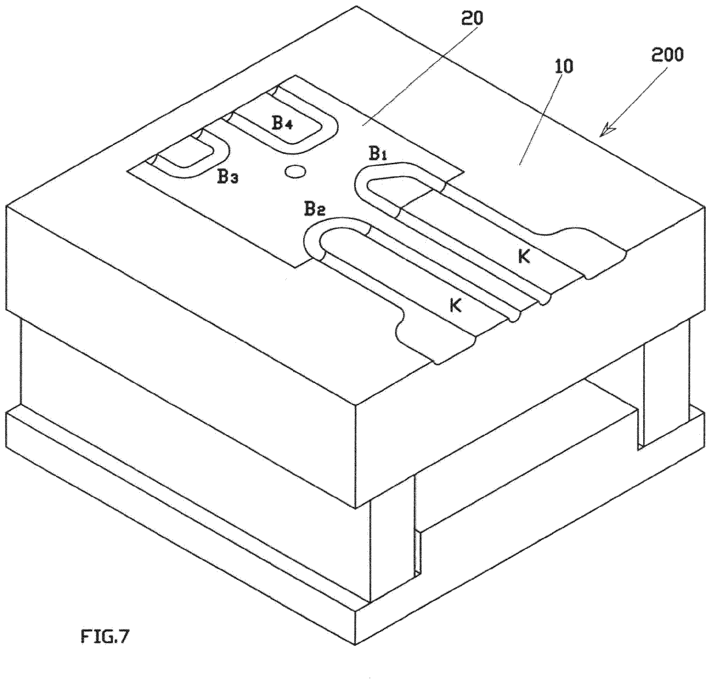

As can be seen in Figures 7-13, a second embodiment of the mould, indicated as a whole with reference 200, envisages the plate 10 where the two main imprints "K", having an identical shape, are obtained, and a plug 20, on which the additional imprints B₁, B₂, B₃, B₄, having different shapes, are obtained.

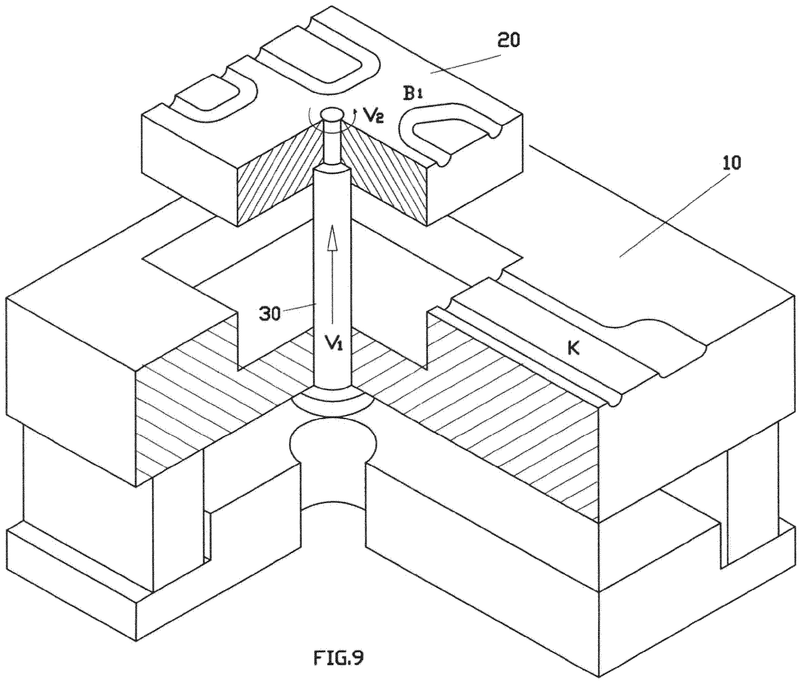

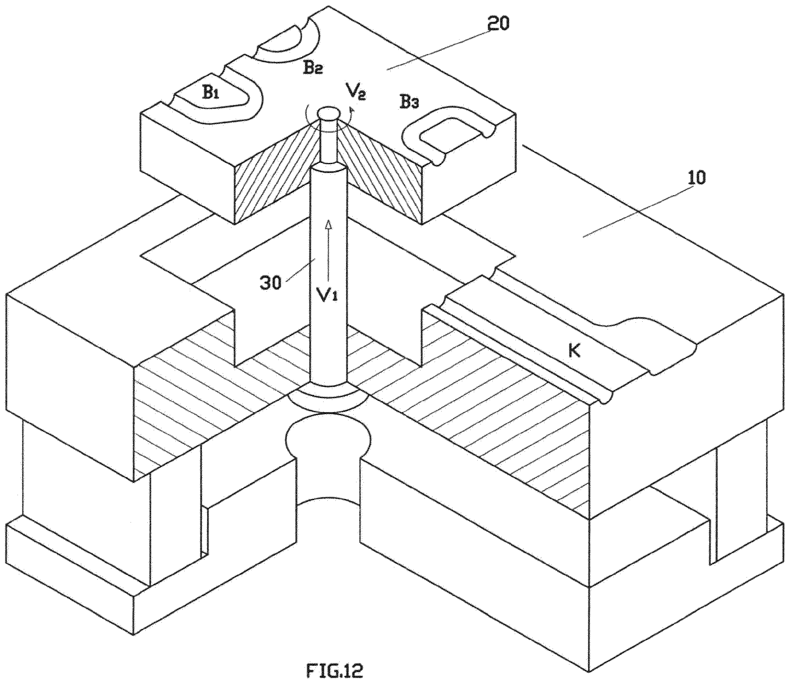

The plug 20 is constrained to the plate 10 through a pin 30 and is applied to the upper end 31 of said pin 30 (see Figures 9 and 12).

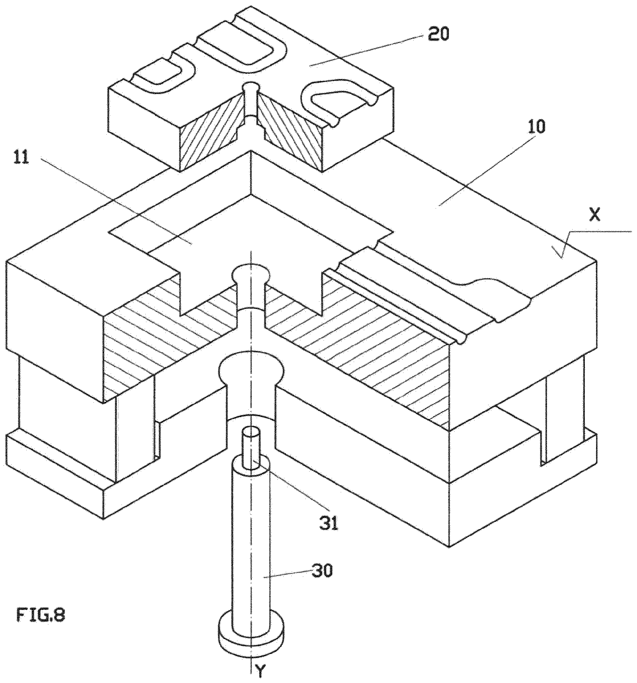

Advantageously, the pin 30 is fitted with a "Y" axis substantially perpendicular to the working plane "X" of the mould (see Fig. 8).

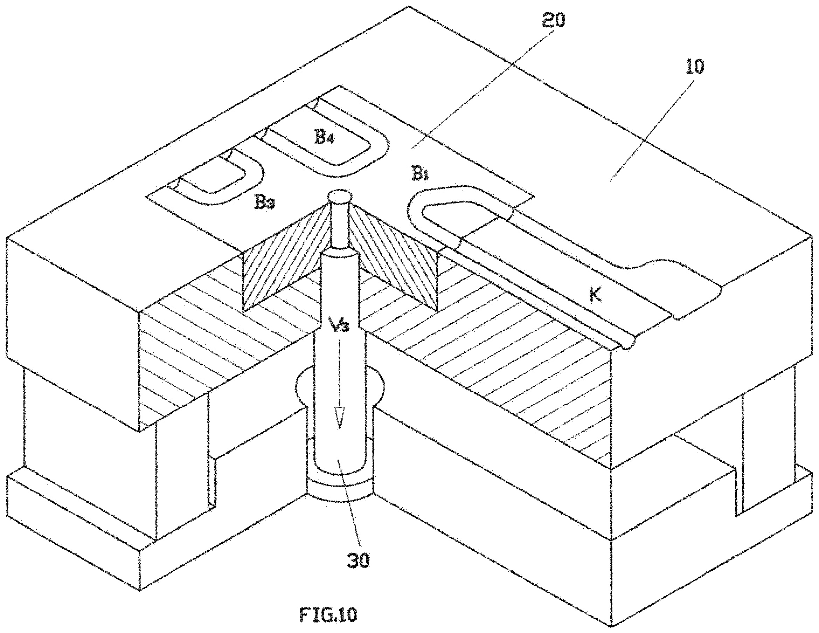

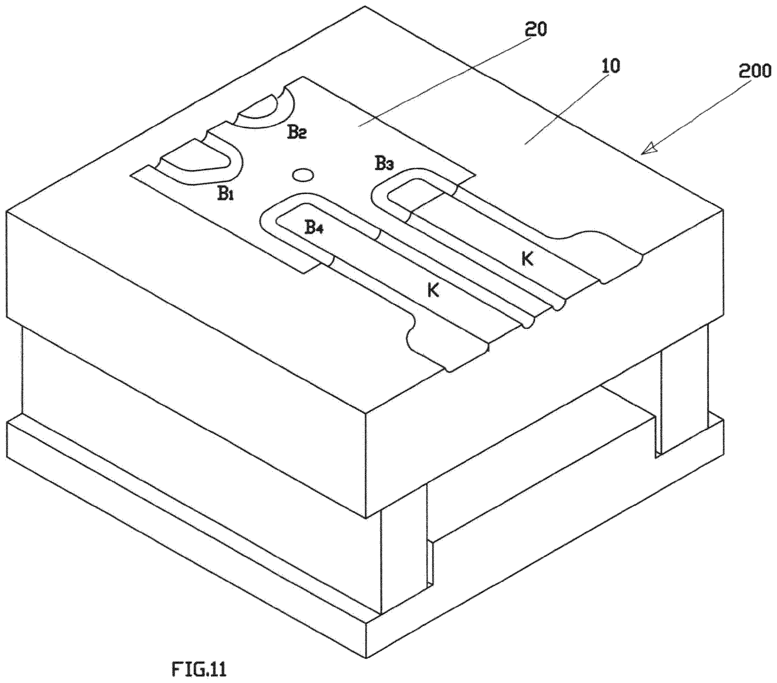

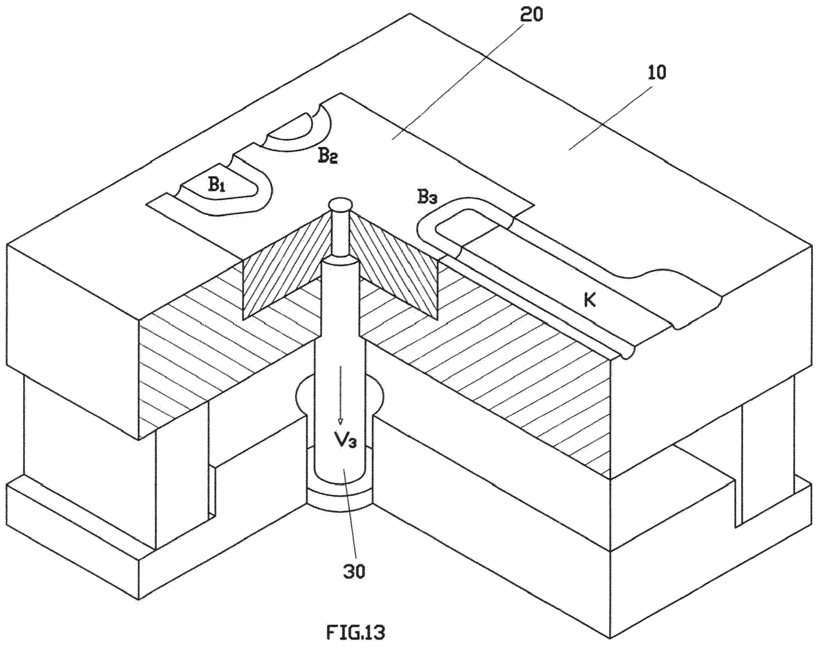

Operatively, to perform the "version change" operation, i.e. to make the ends of the additional imprints (B₁, B₂) and (B₃, B₄) correspond with the pair of main imprints "K" (see Figures 7 and 11) it is necessary to:
- make the pin 30 perform a projecting translation (see Figures 9 and 12, arrow Vi), which lifts the plug 20 for releasing it from the containment hollow 11 obtained on the plate 10;
- make the plug 20 perform an angular rotation (arrow V₂);
- make the pin 30 perform a recessing translation, to bring the plug 20 into the containment seat 11 which, as a result of the aforesaid 180° rotation, is positioned so as to make the ends of the pair of additional imprints (B₁, B₂) or (B₃, B₄) correspond with the pair of main imprints "K" (see Figures 10 and 13, arrow V₃).

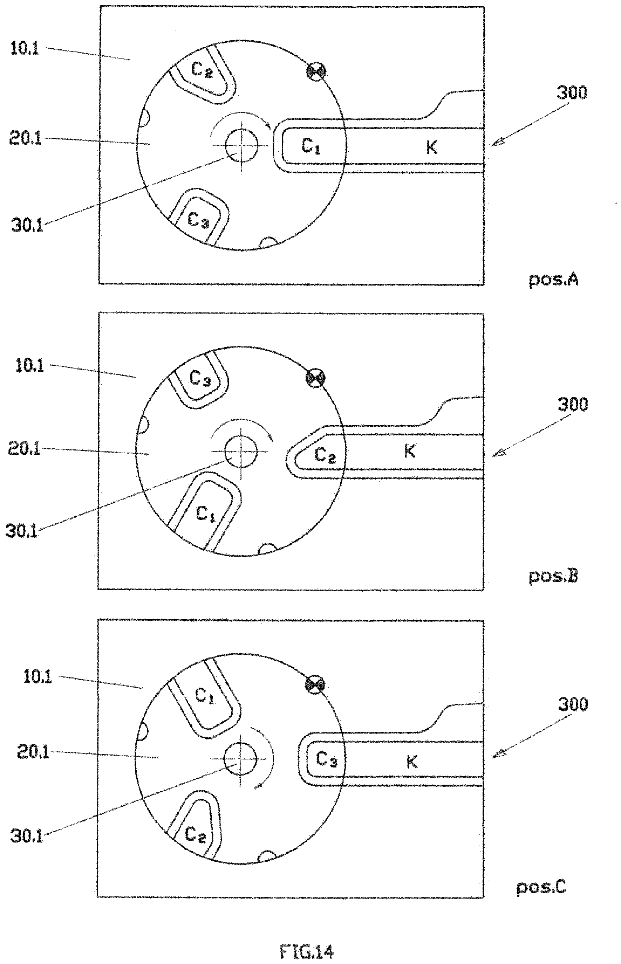

As can be seen in Figure 14, a third embodiment of the mould, indicated as a whole with reference 300, envisages the plate or matrix 10.1, where the main imprint "K" is obtained, and a plug 20.1, on which the additional imprints "C₁, C₂ and C₃" are obtained, with a different shape.

The plug 20.1 is allocated in the seat obtained on the plate 10.1 and is comprised of a disc fitted onto the central pin 30.1 so that, through an angular rotation (see arrow), it is possible to make the ends of the imprints "C₁, C₂ and C₃" correspond, alternately, with the ends of the main imprint "K" ("version change" operation).

Finally, the invention envisages that the plugs 10, 20 and 20.1 are withheld on the constraint through a mobile coupling in order to be interchangeable, as a function of the different shapes of the imprints.

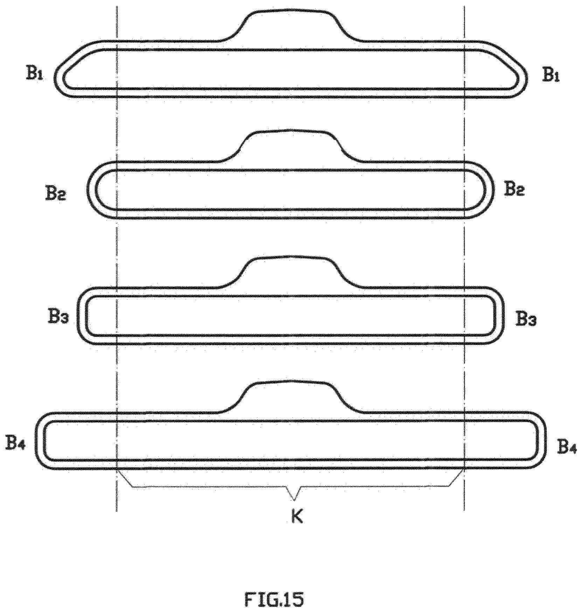

From the above it can be deduced that in order to realize a series of moulded products (see Fig. 15) the predefined aims have been fully reached as, in practice, only one block and some plugs are used, which make the "version change" operation automatic and quick.

Different embodiments from those described are possible, as a function of the conformation of the pieces to be moulded, as long as they all fall within the inventive concept defined by the following claims.

## Claims

1. MOULD WITH VARIABLE IMPRINTS, to be used in injection moulding and die casting, for producing printed parts made of various material, from plastic material to biological material, metal and other alloys, composed of plates known by the terms "matrix" and "punch", which define the negative shape of parts to be realized, and which has the so-called "imprint", such mould being of the type that foresees that one or more plugs are associated with plates, where one or more portions of an imprint or "main imprint" (K) are obtained, on which plugs further portions of imprints, or "additional imprints" of a different conformation are obtained, necessary for obtaining the different shapes, complete with the printed products and where, with the operation known by the term of "version charge", the ends of the aforesaid additional imprints are made to correspond with the ends of the corresponding main imprints (K), so as to be able to obtain, with just one mould, a plurality of total imprints that have mutually different shapes, said mould (100, 200, 300) providing that plugs (2, 20, 20.1) are withheld on a plate (1, 10, 10.1) by means of a movable constraint that allows said plugs (2, 20, 20.1) to be oriented and positioned, so that the ends of portions of additional imprints (Aₙ, Bₙ, Cₙ), match the ends of corresponding imprints (K) obtained on the aforesaid plate (1, 10, 10.1), in said mould (100, 200, 300) being further provided that the plugs (2) are provided with a translation motion and that the plug (2), on which the additional imprints (A₁, A₂) with a different shape are obtained, is positioned in correspondence with the plate (1), possibly allocated in the seat (3), and is constrained through pins or other sliding elements (4), which allow said plug (2) to move through translation, enabling the ends of the additional imprints (A₁, A₂) to match, alternately, the ends of the imprints (K),
**said mould (100, 200, 300) being characterised in that**
the plug (2) is withheld in two of the operating positions thereof, through two keys (5) placed in correspondence with the two ends of the seat (3), which, alternately, lead in lateral abutment onto said plug (2).

2. MOULD WITH VARIABLE IMPRINTS, to be used in injection moulding and die casting, for producing printed parts made of various material, from plastic material to biological material, metal and other alloys, composed of plates known by the terms "matrix" and "punch", which define the negative shape of parts to be realized, and which has the so-called "imprint", such mould being of the type that foresees that one or more plugs are associated with plates, where one or more portions of an imprint or "main imprint" (K) are obtained, on which plugs further portions of imprints, or "additional imprints" of a different conformation are obtained, necessary for obtaining the different shapes, complete with the printed products and where, with the operation known by the term of "version charge", the ends of the aforesaid additional imprints are made to correspond with the ends of the corresponding main imprints (K), so as to be able to obtain, with just one mould, a plurality of total imprints that have mutually different shapes, said mould (100, 200, 300) providing that plugs (2, 20, 20.1) are withheld on a plate (1, 10, 10.1) by means of a movable constraint that allows said plugs (2, 20, 20.1) to be oriented and positioned, so that the ends of portions of additional imprints (Aₙ, Bₙ, Cₙ), match the ends of corresponding imprints (K) obtained on the aforesaid plate (1, 10, 10.1), said mould (100, 200, 300) being **characterised in that** the plugs (20) are provided with a roto-translation motion and that the plug (20) is constrained to the plate (10) through a pin (30), and is applied to an upper end (31) of said pin (30).

3. MOULD WITH VARIABLE IMPRINTS, to be used in injection moulding and die casting, for producing printed parts made of various material, from plastic material to biological material, metal and other alloys, composed of plates known by the terms "matrix" and "punch", which define the negative shape of parts to be realized, and which has the so-called "imprint", such mould being of the type that foresees that one or more plugs are associated with plates, where one or more portions of an imprint or "main imprint" (K) are obtained, on which plugs further portions of imprints, or "additional imprints" of a different conformation are obtained, necessary for obtaining the different shapes, complete with the printed products and where, with the operation known by the term of "version charge", the ends of the aforesaid additional imprints are made to correspond with the ends of the corresponding main imprints (K), so as to be able to obtain, with just one mould, a plurality of total imprints that have mutually different shapes, said mould (100, 200, 300) providing that plugs (2, 20, 20.1) are withheld on a plate (1, 10, 10.1) by means of a movable constraint that allows said plugs (2, 20, 20.1) to be oriented and positioned, so that the ends of portions of additional imprints (Aₙ, Bₙ, Cₙ), match the ends of corresponding imprints (K) obtained on the aforesaid plate (1, 10, 10.1), said mould (100, 200, 300) **being characterised in that** the plugs (20.1) are provided with a rotary motion and that the plug (20.1), on which the additional imprints (C₁, C₂, C₃) with different shape are obtained, is allocated in the seat obtained on the plate (10.1) and comprises a disc, which is conformed so as to make the ends of the imprints (C₁, C₂, C₃) correspond, alternately, through an angular rotation, with the ends of the imprint (K).

4. MOULD WITH VARIABLE IMPRINTS, according to one or more of the preceding claims, **characterised in that** the plugs (10, 20, 20.1) are withheld to the constraint through a movable hook so as to be able to be interchangeable, as a function of the different shapes of imprints.

5. OPERATION OF MOULD WITH VARIABLE IMPRINTS, said mould being realized through the characteristics of claim 2, said operation being **characterised in that** the "version change" operation, in order to make the ends of additional imprints (B₁, B₂) and (B₃, B₄) correspond, alternately, with the end of the main imprints (K), foresees:
- a projecting translation of the pin (30) (arrow Vi), which lifts the plug (20), to release it from a containment seat (11) obtained on the plate (10);
- a rotation of the plug (20) (arrow V₂);
- a recessing translation of the pin (30), to bring the plug (20) into the containment seat (11) which, as a result of the aforesaid 180° rotation, is positioned so as to make the ends of the additional imprints (B₁, B₂) or (B₃, B₄) correspond with the end of the main imprints (K) (arrow V₃).
